# FASCICULE DE BREVET EUROPEEN

(11) **EP 2 625 436 B1**
(45) Date de publication et mention de la délivrance du brevet: **14.01.2015**
(21) Numéro de dépôt: 11764830.3
(22) Date de dépôt: 01.09.2011
(51) Int. Cl.: F16C 13/00, C21D 9/56, F16B 3/00, F16D 1/08, F27D 3/02, B21B 27/03, F27D 5/00

(54) **ROULEAU EN MATERIAU COMPOSITE POUR RECUIT HAUTE TEMPERATURE**
WALZE AUS EINEM VERBUNDSTOFF FÜR HOCHTEMPERATURGLÜHEN
ROLLER MADE FROM A COMPOSITE MATERIAL AND USED FOR HIGH-TEMPERATURE ANNEALING

(30) Priorité: 07.10.2010 FR 1058140
(43) Date de publication de la demande: 14.08.2013
(73) Titulaire: HERAKLES, 33185 Le Haillan (FR)
(72) Inventeur: LACOMBE, Alain, F-33600 Pessac (FR); LACOSTE, Marc, F-33170 Gradignan (FR); BESSETTES, Rémi, F-33370 Tresses (FR); DREVET, Olivier, F-33320 Le Taillan Medoc (FR)
(74) Mandataire: Desormiere, Pierre-Louis
(86) Numéro de dépôt international: PCT/FR2011/052006
(87) Numéro de publication internationale: WO 2012/045935

(56) Documents cités:
- FR-A- 875 630
- JP-A- 3 229 830
- JP-A- 58 081 917
- JP-A- 59 137 170
- US-A- 2 950 097
- US-A1- 2002 169 060
- US-A1- 2009 036 283

## Description

### Arrière-plan de l'invention

La présente invention se rapporte au domaine des rouleaux utilisés pour le transport, le guidage ou le façonnage de produits industriels et destinés à être soumis à des températures et gradients de température importants. L'invention concerne particulièrement, mais non exclusivement, des rouleaux pour lignes de recuit très haute température comme celles utilisées pour la fabrication d'acier très haute performance et dans lesquelles des températures supérieures à 1000°C sont atteintes.

Un rouleau, selon le préambule de la revendication 1, est connu du document JP 59137170 A.

Les tôles d'acier avant très peu de tenue à de telles températures et une traction de la bande n'étant pas envisageable, il est donc nécessaire d'avoir un portage très resserré de la bande afin d'éviter son fluage et assurer son guidage. Par conséquent, la ligne de recuit très haute température doit comporter un rouleau tous les 0,5 m à 2 m. Chacun de ces rouleaux est en outre motorisé et l'ensemble de ces derniers synchronisé afin d'accompagner le déplacement de la bande sans effort de traction et en minimisant les frottements.

Les rouleaux utilisés dans ce type de ligne de recuit ont typiquement des diamètres, par exemple mais non exclusivement, de l'ordre de 100 mm et généralement inférieur à 500 mm, et une table de longueur comprise en général entre 500 mm et 3000 mm.

Les rouleaux utilisés dans ce type d'industrie sont en général réalisés en acier réfractaire avec des revêtements de surface (type céramique oxyde, zircone, silice, etc.) mais ont des durées de vie limitées au-dessus de 1000°C dans les lignes de recuit et doivent être remplacés fréquemment (tous les 1 à 5 mois en général) en raison de leur usure.

Des rouleaux en céramique ou en graphite permettant des températures plus élevées sont en général utilisés. Cependant, ces rouleaux sont relativement fragiles, ce qui limite leur durée de vie. L'invention concerne également les rouleaux présents dans des lignes de recuits de tôles d'acier traitées à des températures plus basses, typiquement entre 600°C et 900°C, mais qui sont soumises à des tractions importantes. Pour ce type de traitement, les rouleaux en acier sont couramment utilisés mais, de par leur coefficient de dilatation significatif, ils peuvent se déformer sous l'effet de la température, ce qui peut conduire dans certains cas à des formations de plis dans la tôle (communément appelés "heat buckles") ou à un mauvais guidage de celle-ci (déviation). Dans ce cas, ces rouleaux sont généralement d'un diamètre plus important, typiquement entre 500 mm et 1000 mm, la table pouvant atteindre 2000 mm.

Le document US 6 709 372 divulgue un rouleau de recuit destiné au transport d'une bande métallique dans une installation de recuit continu et dont la virole ou enveloppe est réalisée soit en matériau composite carbone-carbone (C-C), c'est-à-dire un matériau formé d'un renfort en fibres de carbone densifié par une matrice en carbone, soit en matériau composite SiC-SiC, c'est-à-dire un matériau formé d'un renfort en fibres SiC densifié par une matrice SiC. Le document US 2009/0036283 décrit également un rouleau destiné à être utilisé dans des installations métallurgiques ou sidérurgiques à hautes températures et dont la virole est en matériau composite C-C.

Si un rouleau ayant une virole en matériau composite C-C ou SiC-SiC possède des performances thermomécaniques meilleures qu'un rouleau ayant une virole en acier, l'utilisation de ces deux matériaux composites présentent toutefois des inconvénients.

En effet, ces rouleaux requièrent en général l'utilisation d'un arbre métallique traversant pour assurer la tenue mécanique. Dans ce cas, il est nécessaire d'avoir des moyens d'accouplement en rotation entre l'arbre métallique et la virole en matériau composite afin d'assurer la mise en rotation de la virole par l'arbre.

Cependant, en raison des dilatations thermiques différentielles entre l'arbre et la virole, des moyens spécifiques doivent être prévus soit pour limiter la dilatation de l'arbre, soit pour compenser ces dilatations différentielles.

Dans le premier cas, il existe des dispositifs permettant de refroidir activement l'arbre face aux températures très élevées, par exemple par circulation d'un fluide de refroidissement à l'intérieur de l'arbre. La nécessité d'avoir un refroidissement actif complexifie l'installation et engendre une consommation en énergie importante.

Dans le deuxième cas, des solutions ont été développées pour permettre à l'arbre métallique de se dilater tout en limitant les contraintes sur la virole en composite qui elle, en revanche, se dilate très peu à haute température. Le document US 2009/036283 divulgue un rouleau comprenant un arbre métallique autour duquel est disposée une enveloppe ou virole en matériau composite thermostructural. Afin de compenser les dilatations différentielles entre l'arbre et l'enveloppe, un jeu radial est ménagé entre ces deux éléments. Si cette solution permet de compenser efficacement les dilatations radiales différentielles, elle nécessite toutefois de former des rainures sur la surface externe de l'arbre et des dents sur la surface interne de l'enveloppe destinées à s'engager avec les rainures de l'arbre pour permettre un entraînement en rotation de l'enveloppe par ce dernier.

Ces géométries particulières complexifient la fabrication du rouleau et augmentent son coût. Par ailleurs, le positionnement (centrage) à froid de la virole sur l'arbre présente également des difficultés en raison de la présence du jeu radial à froid important entre l'enveloppe et l'arbre.

### Objet et résumé de l'invention

La présente invention a pour but de proposer une nouvelle structure de rouleau comprenant une virole ou enveloppe en matériau composite dont la géométrie extérieure ne varie pas sous l'effet de fortes températures, notamment supérieures à 1000°C, et/ou lors de changements rapides de température, et ce tout en assurant une liaison en rotation entre cette enveloppe et un arbre métallique des moyens simples et fiables qui permettent en outre de compenser les dilatations différentielles entre ces deux éléments.

A cet effet, la présente invention a pour objet un rouleau de ligne de recuit haute température comprenant une enveloppe cylindrique en matériau composite et un élément de support axial en matériau métallique comportant au moins à une de ses extrémités une fusée,
le rouleau comprenant en outre au moins une première et une deuxième clavettes fixées à l'élément de support axial et disposées chacune respectivement dans une première et une deuxième ouvertures de passage ménagées dans l'enveloppe, lesdites ouvertures de passage présentant des dimensions supérieures à celles des clavettes, chaque ouverture de passage comportant, suivant un sens de parcours déterminé le long de la circonférence de l'enveloppe, une première et une deuxième surfaces d'appui circonférentiel, et, suivant un sens de parcours axial déterminé, une première et une deuxième surface d'appui longitudinal,
caractérisé en ce que la première clavette est montée en appui contre la première surface d'appui circonférentiel de la première ouverture de passage tandis que la deuxième clavette est montée contre la deuxième surface d'appui circonférentiel de la deuxième ouverture de passage,
et en ce que la première clavette est montée en appui contre la deuxième surface d'appui longitudinal de la première ouverture de passage tandis que la deuxième clavette est montée contre la première surface d'appui longitudinal de la deuxième ouverture de passage.

L'enveloppe cylindrique du rouleau de l'invention, à savoir le corps du rouleau destiné à supporter les tôles à de hautes températures, est réalisée en matériau composite thermostructural. Grâce aux excellentes performances thermiques, mécaniques et thermomécaniques des matériaux composites thermostructuraux, le rouleau de l'invention est apte à fonctionner à des températures supérieures à celles supportées par l'acier, c'est-à-dire des températures supérieures à 1000°C et pouvant aller jusqu'à 1300°C, et ce sans la fragilité présentée par la céramique ou le graphite.

Les matériaux composites thermostructuraux présentent en outre des caractéristiques structurales (renfort fibreux densifié par une matrice) suffisantes pour résister aux charges supportées par les rouleaux de l'art antérieur. En outre, ces matériaux, comme le matériau composite C-C ou CMC, présentent un faible coefficient de dilatation thermique permettant d'éviter à l'enveloppe de se déformer sous l'effet de températures élevées et conserver la géométrie externe du rouleau lors des montées ou descentes en température. Ces caractéristiques combinées sont aussi particulièrement intéressantes pour fabriquer des rouleaux équipant les lignes de recuit de tôles traitées sous forte tension et hautes températures car elles permettent de limiter les risques de "heat buckles" et de déviation.

Par ailleurs, l'entraînement en rotation de l'enveloppe cylindrique est assurée par des clavettes solidaires du mandrin d'au moins une fusée. La transmission du couple d'entraînement est, par conséquent, réalisée avec des éléments simples, peu nombreux et à faible coût.

En outre, grâce à l'appui circonférentiel antagoniste des clavettes sur l'enveloppe cylindrique, cette dernière peut être entraînée par la fusée suivant les deux sens de rotation tout en ménageant entre chaque clavette et l'ouverture de passage correspondante de l'enveloppe un jeu circonférentiel permettant une dilatation des clavettes et/ou un déplacement de celles-ci dû à la dilatation de la fusée sans exercer de contraintes trop importantes sur l'enveloppe. Cette limitation des contraintes sur l'enveloppe en cas de dilatations différentielles entre les clavettes/fusée et l'enveloppe est également réalisé dans le sens axial grâce aux surfaces d'appui antagonistes des clavettes sur l'enveloppe dans le sens axial.

Par ailleurs, compte tenu de la faible masse et de la faible inertie du rouleau de l'invention par rapport aux rouleaux en acier, les puissances nécessaires à leur entraînement sont nettement inférieures.

Selon une caractéristique additionnelle de l'invention, les première et deuxième clavettes sont disposées au voisinage d'une première extrémité de l'élément de support axial, le rouleau comprenant en outre au moins une troisième et une quatrième clavettes disposées au voisinage de la seconde extrémité de l'élément de support axial, lesdites troisième et une quatrième clavettes étant fixées à l'élément de support axial et disposées chacune respectivement dans une troisième et une quatrième ouvertures de passage ménagées dans l'enveloppe, lesdites ouvertures de passage présentant des dimensions supérieures à celles des clavettes, chaque ouverture de passage comportant, suivant le sens de parcours déterminé le long de la circonférence de l'enveloppe, une première et une deuxième surfaces d'appui circonférentiel, et, suivant le sens de parcours axial déterminé, une première et une deuxième surfaces d'appui longitudinal. La troisième clavette est montée en appui contre la deuxième surface d'appui circonférentiel de la troisième ouverture de passage tandis que la quatrième clavette est montée contre la première surface d'appui circonférentiel de la quatrième ouverture de passage. La troisième clavette est montée en appui contre la première surface d'appui longitudinal de la troisième ouverture de passage tandis que la quatrième clavette est montée contre la deuxième surface d'appui longitudinal de la quatrième ouverture de passage.

Selon une autre caractéristique additionnelle de l'invention, chaque fusée comprend un becquet de centrage coopérant avec un épaulement ménagé à une extrémité de l'enveloppe afin de faciliter le centrage à froid des fusées avec l'enveloppe cylindrique.

Selon une autre caractéristique additionnelle de l'invention, le rouleau comprend en outre un élément de support axial en matériau métallique disposé à l'intérieur de l'enveloppe cylindrique dans le prolongement de la fusée et au moins un élément élastiquement déformable disposé entre la surface externe de l'élément de support axial et la surface interne de l'enveloppe. Cette liaison élastique entre l'enveloppe cylindrique et l'élément de support axial permet de compenser les dilatations différentielles entre ces éléments tout en assurant un centrage de l'axe de l'enveloppe sur celui de l'élément de support axial aussi bien à froid qu'à haute température.

Cette liaison élastique peut être notamment réalisée avec soit une pluralité de languettes élastiques ou de patins en feuillards de graphite uniformément répartis dans l'espace circonférentiel entre la surface externe de l'élément de support axial et la surface interne de l'enveloppe, soit une lame élastique en forme de bague fendue disposée dans l'espace circonférentiel entre la surface externe de l'élément de support axial et la surface interne de l'enveloppe.

Selon une autre caractéristique additionnelle de l'invention, l'enveloppe cylindrique est réalisée en matériau composite carbone-carbone (C-C) qui présente à la fois un coefficient de dilatation thermique faible et une bonne conductivité thermique. D'autres matériaux composites thermostructuraux présentant un rapport coefficient de dilatation thermique/conductivité thermique proche de 0, comme les matériaux CMC, peuvent également être utilisés pour réaliser l'enveloppe cylindrique.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique d'un rouleau pour ligne de recuit haute température selon un mode de réalisation de l'invention;
- les figures 2 et 3 sont des vues partielles du rouleau de la figure 1;
- la figure 4 est une vue en coupe selon le plan IV-IV de la figure 1;
- les figures 5 et 6 montrent des clavettes du rouleau de la figure 1;
- les figures 7 et 8 sont des vues de détails de parties du rouleau de la figure 1;
- les figures 9 et 10 sont des vues en coupe rabattue respectivement selon les plans IX-IX et X-X de la figure 4;
- la figure 11 est une vue partielle en perspective montrant une variante de réalisation d'un élément élastiquement déformable permettant de compenser les dilatations différentielles entre l'élément de support axial et l'enveloppe du rouleau de l'invention.

### Description détaillée d'un mode de réalisation

Un domaine particulier mais non exclusif d'application de l'invention est celui des installations ou lignes de recuit en continu dans lesquelles on traite des bandes de tôles métalliques, telles que des tôles d'acier très haute performance, à des températures supérieures à 1000°C.

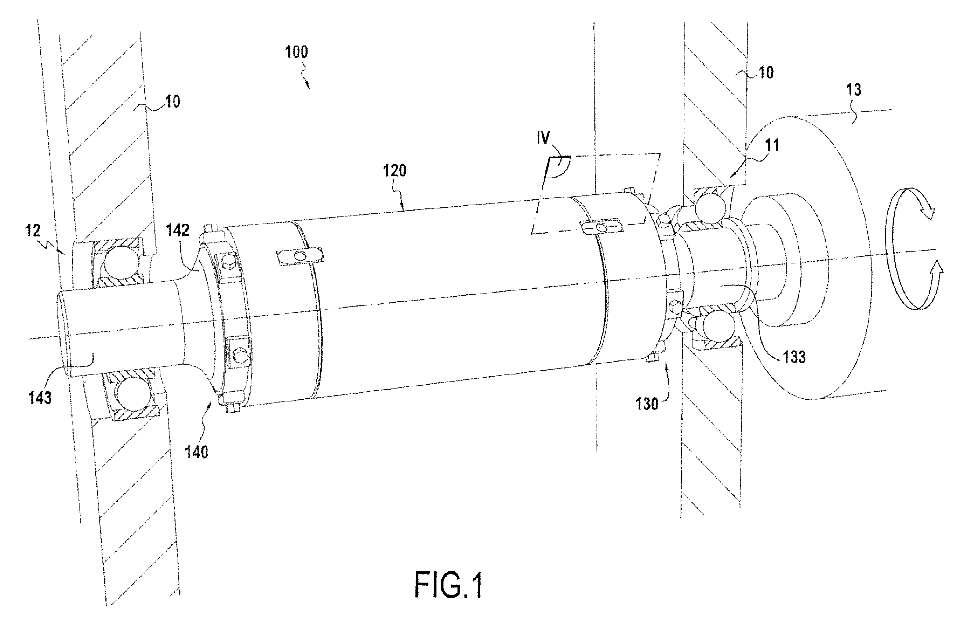

Les figures 1 à 3 illustrent un rouleau 100 conformément à un mode de réalisation de l'invention qui peut être utilisé indifféremment pour le transport, le guidage ou le façonnage de bande de tôles métalliques dans des lignes de recuit.

Le rouleau 100 comprend une virole ou enveloppe cylindrique 120 et un élément de support axial 170 dont une première extrémité comporte une fusée 130 tandis que l'autre extrémité comporte une fusée 140.

Afin d'assurer un fonctionnement fiable à des températures supérieures à 1200°C, qui ne sont pas supportables sans déformation pour des rouleaux métalliques, et ce tout en ayant une résistance mécanique supérieure à celle des céramiques ou du graphite, l'enveloppe cylindrique 120 est constituée d'une pièce axisymétrique 121 réalisée en matériau composite thermostructural, notamment en matériau composite carbone/carbone (C-C) qui, de façon connue, est un matériau formé d'un renfort en fibres de carbone densifié par une matrice en carbone ou en matériau composite CMC qui, de façon connue, un matériau formé d'un renfort en fibres de carbone ou céramique densifié par une matrice au moins partiellement céramique. Les matériaux composites thermostructuraux, comme le matériau C-C ou CMC, sont caractérisés par leurs propriétés mécaniques élevées qui les rendent aptes à constituer des pièces de structure et par leur capacité à conserver ces propriétés mécaniques à des températures élevées pouvant aller au-delà de 1300°C dans le cas du matériau C-C ou CMC. Le matériau composite thermostructural confère à l'enveloppe une résistance mécanique suffisante pour être autoporteuse, c'est-à-dire pour supporter les efforts auxquels est soumis le rouleau sans support intérieur.

Ce type de matériau présente un outre un faible coefficient de dilatation thermique (environ 2,5x10⁻⁶ °C pour le matériau C-C) en comparaison à ceux des matériaux métalliques tels que l'acier (environ 12x10⁻⁶ °C). Par conséquent, l'enveloppe 120 constituant la partie du rouleau 100 destinée à être en contact avec les tôles à traiter se dilate très peu sous l'effet de la température et ne se déforme pas de par ses caractéristiques mécaniques à hautes températures.

La fabrication de pièces en matériau composite, notamment C-C ou CMC, est bien connue. Elle comprend généralement la réalisation d'une préforme fibreuse carbone dont la forme est voisine de celle de la pièce à fabriquer et la densification de la préforme par la matrice. Les matériaux CMC peuvent aussi être réalisés avec des renforts en fibres céramiques, telles que des fibres SiC. Toutefois, dans la présente invention, on utilise des renforts en fibres de carbone car les caractéristiques mécaniques des fibres céramiques telles que les fibres SiC se dégradant à température élevée, par exemple à partir de 1200°C, alors qu'au contraire les caractéristiques mécaniques des fibres de carbone s'améliorent à haute température.

La préforme fibreuse constitue le renfort de la pièce dont le rôle est essentiel vis-à-vis des propriétés mécaniques. La préforme est obtenue à partir de textures fibreuses en fibres de carbone. Les textures fibreuses utilisées peuvent être de diverses natures et formes telles que notamment:
- tissu bidimensionnel (2D),
- tissu tridimensionnel (3D) obtenu par tissage 3D ou multicouches,
- tresse,
- tricot,
- feutre,
- nappe unidirectionnelle (UD) de fils ou câbles ou nappes multidirectionnelle (nD) obtenue par superposition de plusieurs nappes UD dans des directions différentes et liaison des nappes UD entre elles par exemple par couture, par agent de liaison chimique ou par aiguilletage.

On peut aussi utiliser une structure fibreuse formée de plusieurs couches superposées de tissu, tresse, tricot, feutre, nappes, câbles ou autres, lesquelles couches sont liées entre elles par exemple par couture, par implantation de fils ou d'éléments rigides ou par aiguilletage.

La mise en forme est réalisée par bobinage filamentaire, enroulage de nappe UD sur un mandrin, tissage, empilage, aiguilletage de strates bidimensionnelles/tridimensionnelles ou de nappes de câbles, etc.

Dans le cas d'un matériau C-C, la densification de la préforme fibreuse peut être réalisée par voie liquide en imprégnant cette dernière avec une résine précurseur de la matrice carbone telle qu'une résine de type phénolique.

Après imprégnation, la préforme fibreuse destinée à constituer le renfort fibreux de la pièce à réaliser, et ayant une forme correspondant sensiblement à celle de cette pièce, est mise en forme par conformation à l'aide d'un outillage de maintien. La ou les résines sont ensuite transformées (polymérisation/carbonisation) par traitement thermique. Les opérations d'imprégnation et de polymérisation/carbonisation peuvent être répétés plusieurs fois si nécessaire pour obtenir des caractéristiques mécaniques déterminées.

La densification de la préforme fibreuse peut-être également réalisée, de façon connue, par voie gazeuse par infiltration chimique en phase vapeur de la matrice carbone (CVI).

Une densification combinant voie liquide et voie gazeuse est parfois utilisée pour faciliter la mise en oeuvre, limiter les coûts et les cycles de fabrication tout obtenant des caractéristiques satisfaisantes pour l'utilisation envisagée.

Les matériaux CMC qui peuvent être utilisés pour réaliser la pièce axisymétrique constituant l'enveloppe du rouleau de l'invention sont formés par un renfort fibreux en fibres de carbone qui est densifié par une matrice au moins partiellement céramique, notamment carbure, nitrure, oxyde réfractaire, etc., comme par exemple un matériau composite carbone-carbone/carbure de silicium (C-C/SiC) qui est un matériau formé d'un renfort en fibres de carbone et densifié par une matrice comprenant une phase carbone et une phase carbure de silicium ou en matériau composite carbone-carbure de silicium (C-SiC) qui est un matériau formé d'un renfort en fibres de carbone densifié par une matrice en carbure de silicium. Dans le cas du matériau C-C/SiC, la première phase carbone de la matrice est déposée en premier afin d'être présente au plus près des fibres et recouverte ensuite par la deuxième phase SiC, ce qui permet de former sur la première phase carbone une couche de protection contre l'oxydation en SiC.

Dans le cas d'une densification par voie liquide, on utilise pour la matrice (ou phase céramique de celle-ci) une résine précurseur de céramique qui peut être par exemple une résine polycarbosilane précurseur de carbure de silicium (SiC), ou une résine polysiloxane précurseur de SiCO, ou une résine polyborocarbosilazane précurseur de SiCNB, ou une résine polysilazane (SiCN). Dans le cas d'un matériau C-C/SiC, la préforme fibreuse est d'abord imprégnée avec une résine précurseur de la phase carbone de la matrice telle qu'une résine de type phénolique.

Dans le cas d'une densification par voie gazeuse par infiltration chimique en phase vapeur de la matrice (CVI), on utilise pour la matrice (ou phase céramique de celle-ci) un précurseur gazeux de SiC qui peut être, par exemple, lors de la réalisation d'un matériau C-SiC, du méthyltrichlorosilane (MTS) donnant du SiC par décomposition du MTS. Lors de la réalisation d'un matériau C-C/SiC, la première phase carbone peut être formée avec des gaz hydrocarbures tels que méthane et/ou propane donnant le carbone par craquage, la deuxième phase SiC étant ensuite déposée sur la première phase carbone, par exemple par décomposition du MTS.

Les densification voie liquide et voix gazeuse peuvent être bien entendu combinées entre elles.

L'élément de support axial 170 et les fusées 130 et 140 sont réalisées en matériau métallique, par exemple en acier du type Inox. Chaque fusée 130, respectivement 140, comprend un mandrin 131, respectivement 141, une portion tronconique 132, respectivement 142, qui est prolongée par un demi-arbre 133, respectivement 143. L'élément de support axial 170 et les fusées 130 et 140 peuvent être formés en une seule pièce. Selon une variante, les fusées peuvent être reliées à l'élément de support axial par des moyens de liaison démontables, ce qui présente l'avantage de permettre le démontage des deux fusées de l'élément de support axial et d'assurer ainsi une maintenance ou un remplacement d'un de ces éléments de façon indépendante.

Dans l'exemple ici considéré, le rouleau 100 est disposé à l'intérieur d'une enceinte 10 d'une ligne de recuit (figure 1). Les demi-arbres 133 et 143 sont respectivement supportés par des paliers 11 et 12 de l'enceinte 10. Dans le mode de réalisation de la figure 1, l'arbre 133 est accouplé avec un moteur d'entraînement en rotation 13 tandis que l'arbre 143 est maintenu dans un palier 12.

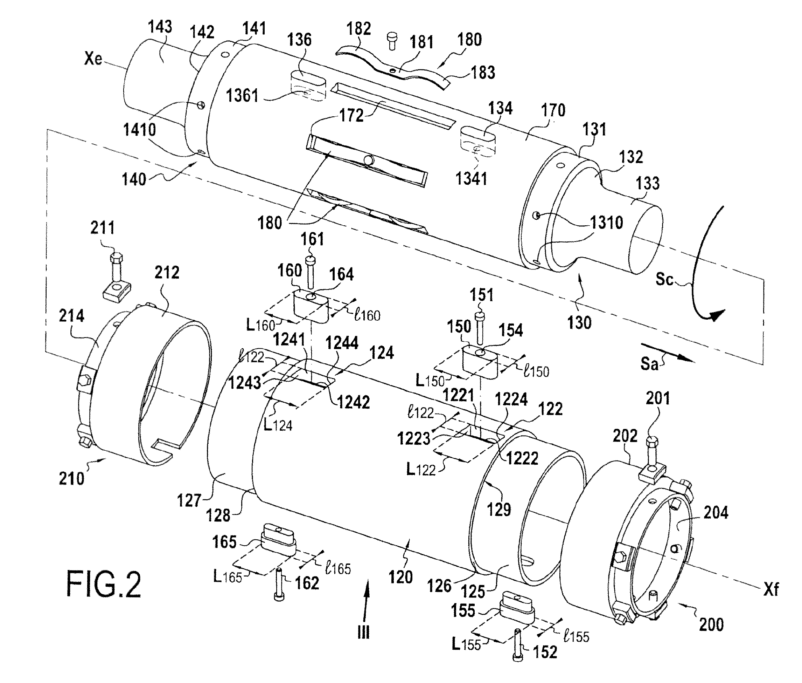

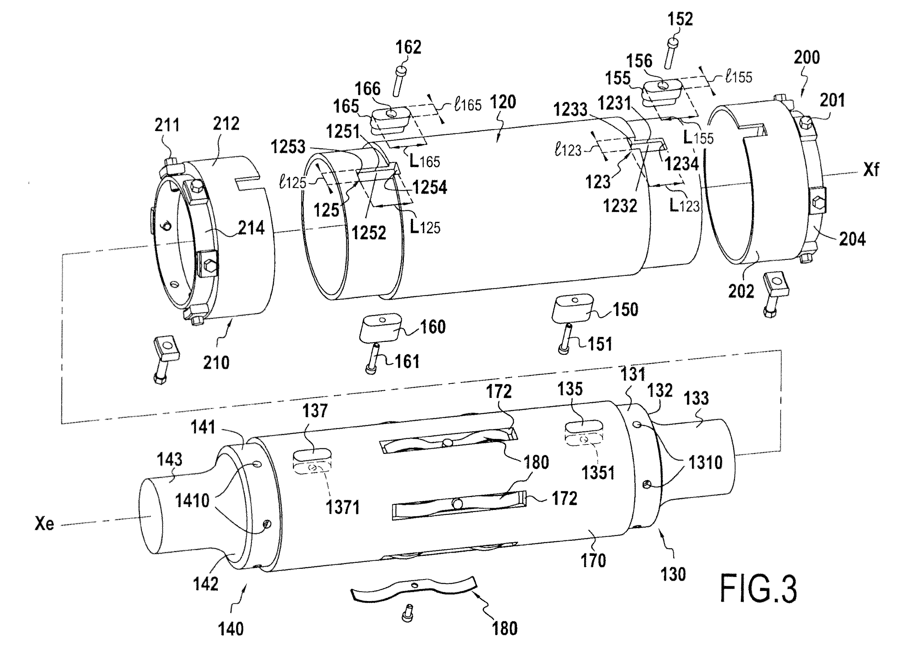

L'enveloppe cylindrique 120 est maintenue en position axiale sur l'élément axial 170 au moyen de deux bagues ou coiffes 200 et 210. Plus précisément, une portion de section réduite 204 de la coiffe 200 est fixée sur le mandrin 131 de la fusée 130 au moyen d'organes de fixation 201 (par exemple des vis) coopérant avec des trous filetés 1310 ménagés dans le mandrin 131 (figures 2 et 3). De même, une portion de section réduite 214 de la coiffe 210 est fixée sur le mandrin 141 de la fusée 140 au moyen d'organes de fixation 211 (par exemple des vis) coopérant avec des trous filetés 1410 ménagés dans le mandrin 141 (figures 2 et 3). Les portions de section réduite 204 et 214 sont respectivement prolongées par des portions cylindriques 202 et 212 formant des becquets de centrage comme expliqué ci-après.

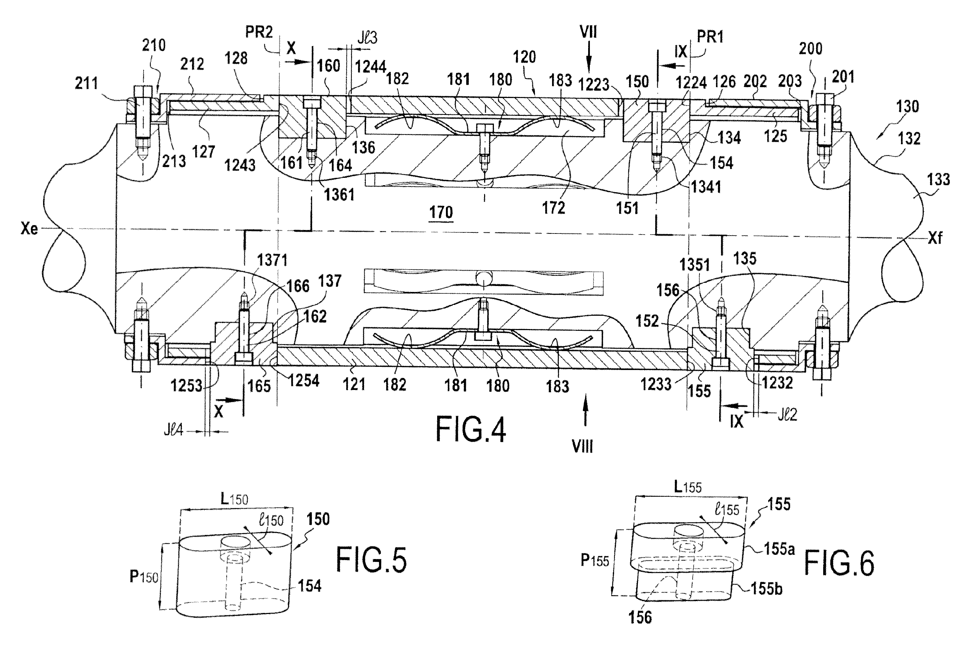

Comme illustrée sur les figures 2 à 4, l'élément de support axial 170 comporte au voisinage de la fusée 130 un premier et un deuxième logements 134 et 135, le logement 134 étant destiné à recevoir une première clavette 150 (figure 5) et le logement 135 étant destiné à recevoir une deuxième clavette 155 (figure 6). Les clavettes 150 et 155 sont formées en matériau métallique, par exemple avec le même matériau que celui des fusées 130 et 140. Les clavettes 150 et 155 présentent une forme parallélépipédique qui s'étend sur une longueur L₁₅₀, respectivement L₁₅₅ (pour sa partie supérieure 155a), une largeur I₁₅₀, respectivement I₁₅₅ (pour sa partie supérieure 155a), et une profondeur P₁₅₀, respectivement P₁₅₅. La clavette 155 comporte une partie supérieure 155a destinée à être disposée dans une ouverture de passage ménagée dans l'enveloppe 120 comme décrit ci-après en détails et une partie inférieure 155b de longueur et de largeur réduite destinée à coopérer avec le logement 135. Les dimensions de la partie supérieure 155a de la clavette 155 peuvent être reprises si nécessaire (usinage) afin d'ajuster le montage final.

La première clavette 150 est fixée dans le premier logement 134 par introduction d'une vis 151 au travers d'un passage 154 ménagé dans la clavette et serrage de celle-ci dans un trou 1341 réalisé dans le fond du logement 134 et comportant un taraudage correspondant au filetage de la vis 151 (non représentés sur la figure 4). D'autres moyens de fixation de la clavette dans le logement 1341 sont bien entendu envisageables. De même, la deuxième clavette 155 est fixée dans le deuxième logement 135 par introduction d'une vis 152 au travers d'un passage 156 ménagé dans la clavette et serrage de celle-ci dans un trou 1351 réalisé dans le fond du logement 135 et comportant un taraudage correspondant au filetage de la vis 152 (non représentés sur la figure 4).

Afin de permettre le passage des clavettes au travers de l'enveloppe 120 tout en permettant la mise en rotation de cette dernière par l'élément axial 170, une première et une deuxième ouvertures de passage 122 et 123 sont ménagées sur cette dernière. La première ouverture de passage 122 est destinée à coopérer avec le premier logement 134 tandis que la deuxième ouverture de passage 123 est destinée à coopérer avec le deuxième logement 135. La première ouverture de passage 122 comporte, suivant un sens de parcours Sc le long de la circonférence de l'enveloppe 120, une première et une deuxième surfaces d'appui circonférentiel 1221 et 1222. La première ouverture 122 comporte en outre, suivant un sens de parcours axial Sa, une première et une deuxième surfaces d'appui longitudinale 1223 et 1224. De même, la deuxième ouverture de passage 123 comporte, suivant le sens de parcours Sc le long de la circonférence de l'enveloppe 120, une première et une deuxième surfaces d'appui circonférentiel 1231 et 1232 et, suivant le sens de parcours axial Sa, une première et une deuxième surfaces d'appui longitudinal 1233 et 1234.

La première ouverture de passage 122 présente des dimensions, ici une longueur L₁₂₂ et une largeur I₁₂₂, supérieures à celles de la première clavette 150, ici une longueur L₁₅₀ et une largeur I₁₅₀. De la même façon, la deuxième ouverture de passage 123 présente des dimensions, ici une longueur L₁₂₃ et une largeur I₁₂₃, supérieures à celles de la deuxième clavette 155, ici une longueur L₁₅₅ et une largeur I₁₅₅.

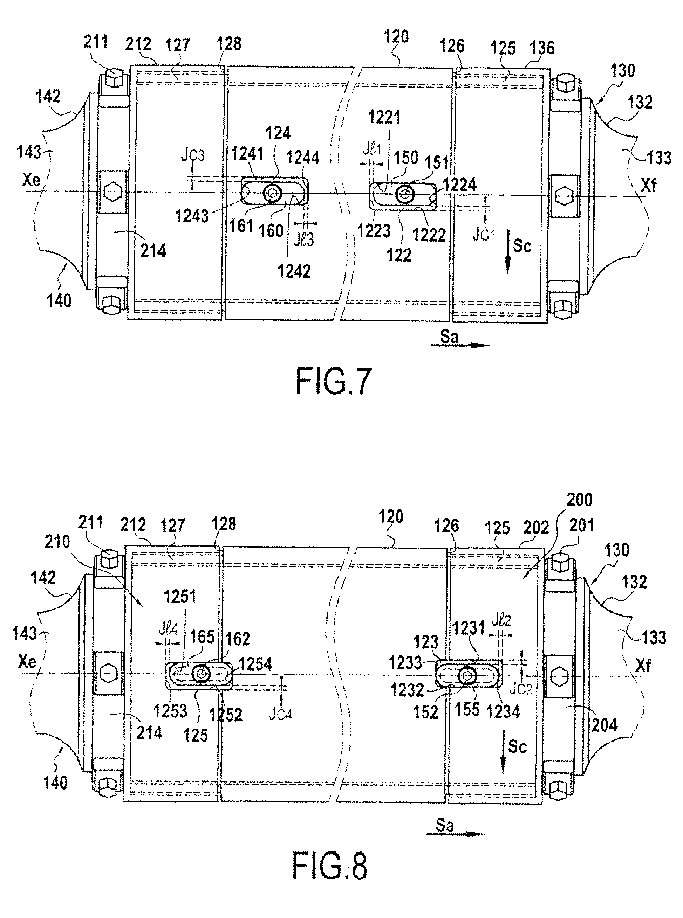

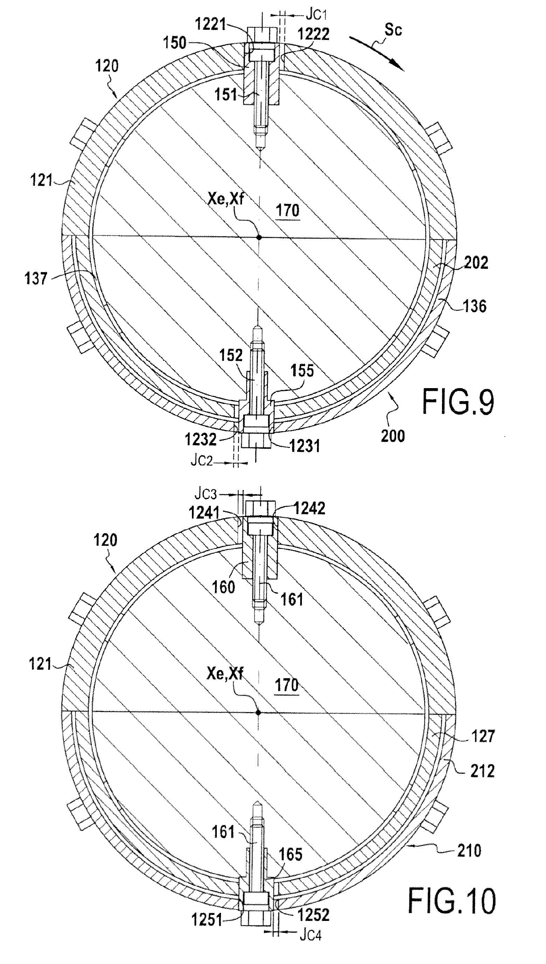

Conformément à la présente invention et comme illustrée sur les figures 7 et 9, la première clavette 150 est montée en appui contre la première surface d'appui circonférentiel 1221 de la première ouverture de passage 122 de manière à ménager un jeu circonférentiel J_{C1} entre la clavette 150 et la deuxième surface d'appui circonférentiel 1222 de l'ouverture 122. La première clavette 150 est en outre montée en appui contre la deuxième surface d'appui longitudinal 1224 de la première ouverture de passage 122 de manière à ménager un jeu longitudinal J_{I1} entre la clavette 150 et la première surface d'appui longitudinal 1223 de l'ouverture 122.

Toujours selon l'invention et comme illustrée sur les figures 8 et 10, la deuxième clavette 155 est montée en appui contre la deuxième surface d'appui circonférentiel 1232 de la deuxième ouverture de passage 123 de manière à ménager un jeu circonférentiel J_{C2} entre la clavette 155 et la première surface d'appui circonférentiel 1231 de l'ouverture 123. La deuxième clavette 155 est en outre montée en appui contre la première surface d'appui longitudinal 1233 de la deuxième ouverture de passage 123 de manière à ménager un jeu longitudinal J_{I2} entre la clavette 155 et la deuxième surface d'appui longitudinal 1234 de l'ouverture 122.

Grâce aux appuis antagonistes à la fois circonférentiels et longitudinaux des première et deuxième clavettes 150 et 155 sur les surfaces d'appui circonférentiel et longitudinal des ouvertures de passage 122 et 123, il est possible de maintenir en position radiale et en position axiale l'enveloppe par rapport à l'élément de support axial 170, et ce tout en limitant les contraintes exercées par les clavettes sur l'enveloppe lors de la dilatation des clavettes et/ou de l'élément de support axial 170 grâce aux jeux circonférentiels J_{C1} et J_{C2} et aux jeux longitudinaux J_{I1} et J_{I2} ménagés entre les clavettes 150 et 155 et les ouvertures de passages 122 et 123 respectivement.

Les appuis circonférentiels antagonistes des clavettes 150 et 155 respectivement sur les surfaces d'appui circonférentiel 1221 et 1232 des ouvertures de passage 122 et 123 permettent en outre de transmettre le couple de rotation à l'enveloppe 120 dans les deux sens de rotation.

Les clavettes 150 et 155 et, par conséquent, les ouvertures de passages 122 et 123 de l'enveloppe (ainsi que les logements 134 et 135) sont placées de préférence dans des positions radialement opposées par rapport à l'axe Xf de l'enveloppe 120 comme illustré sur la figure 9. En effet, en plaçant les points d'appui axiaux des clavettes sur l'enveloppe dans un même plan perpendiculaire à l'axe Xf de l'enveloppe, on réduit les contraintes des clavettes sur l'enveloppe en cas de dilatation.

En outre, comme illustrées sur la figure 4, les clavettes 150 et 155 sont de préférence décalées axialement suivant l'axe Xe de l'enveloppe. Ce décalage permet également de réduire les contraintes des clavettes sur l'enveloppe en cas de dilatation.

Dans l'exemple décrit ici, l'élément de support axial 170 comporte en outre au voisinage de la fusée 140 un troisième et un quatrième logements 136 et 137, le logement 136 étant destiné à recevoir une troisième clavette 160 (figures 2 et 3) similaire à la clavette 150 et le logement 137 étant destiné à recevoir une quatrième clavette 165 (figures 2 et 3) similaire à la clavette 155.

La troisième clavette 160 est fixée dans le troisième logement 136 par introduction d'une vis 161 au travers d'un passage 164 ménagé dans la clavette 160 et serrage de celle-ci dans un trou 1361 réalisé dans le fond du logement 136 et comportant un taraudage correspondant au filetage de la vis 161 (non représentés sur la figure 4).

De même, la quatrième clavette 165 est fixée dans le deuxième logement 137 par introduction d'une vis 162 au travers d'un passage 166 ménagé dans la clavette 165 et serrage de celle-ci dans un trou 1371 réalisé dans le fond du logement 137 et comportant un taraudage correspondant au filetage de la vis 162 (non représentés sur la figure 4).

Afin de permettre le passage des clavettes au travers de l'enveloppe 120 tout en permettant la mise en rotation de cette dernière par l'élément axial 170, une troisième et une quatrième ouvertures de passage 124 et 125 sont ménagées sur cette dernière. La troisième ouverture de passage 124 est destinée à coopérer avec le troisième logement 136 tandis que la quatrième ouverture de passage 125 est destinée à coopérer avec le quatrième logement 137. La troisième ouverture de passage 124 comporte, suivant un sens de parcours Sc le long de la circonférence de l'enveloppe 120, une première et une deuxième surfaces d'appui circonférentiel 1241 et 1242 et, suivant un sens de parcours axial Sa, une première et une deuxième surface d'appui longitudinal 1243 et 1244. De même, la quatrième ouverture de passage 125 comporte, suivant le sens de parcours Sc le long de la circonférence de l'enveloppe 120, une première et une deuxième surfaces d'appui circonférentiel 1251 et 1252 et, suivant le sens de parcours axial Sa, une première et une deuxième surfaces d'appui longitudinal 1253 et 1254.

La troisième ouverture de passage 124 présente des dimensions, ici une longueur L₁₂₄ et une largeur I₁₂₄, supérieures à celles de la troisième clavette 160, ici une longueur L₁₆₀ et une largeur I₁₆₀. De la même façon, la quatrième ouverture de passage 125 présente des dimensions, ici une longueur L₁₂₅ et une largeur I₁₂₅, supérieures à celles de la quatrième clavette 165, ici une longueur L₁₆₅ et une largeur I₁₆₅.

Conformément à une caractéristique additionnelle de la présente invention et comme illustrée sur les figures 7 et 10, la troisième clavette 160 est montée en appui contre la deuxième surface d'appui circonférentiel 1242 de la première ouverture de passage 124 de manière à ménager un jeu circonférentiel I_{C3} entre la clavette 160 et la première surface d'appui circonférentiel 1241 de l'ouverture 124. La troisième clavette 160 est en outre montée en appui contre la première surface d'appui longitudinal 1243 de la troisième ouverture de passage 124 de manière à ménager un jeu longitudinal J₁₃ entre la clavette 160 et la deuxième surface d'appui longitudinal 1244 de l'ouverture 124.

Toujours selon une caractéristique additionnelle de l'invention et comme illustrée sur les figures 7 et 10, la quatrième clavette 165 est montée en appui contre la première surface d'appui circonférentiel 1251 de la quatrième ouverture de passage 125 de manière à ménager un jeu circonférentiel J_{C4} entre la clavette 165 et la deuxième surface d'appui circonférentielle 1252 de l'ouverture 125. La quatrième clavette 165 est en outre montée en appui contre la deuxième surface d'appui longitudinal 1254 de la quatrième ouverture de passage 125 de manière à ménager un jeu longitudinal J_{I4} entre la clavette 165 et la première surface d'appui longitudinal 1253 de l'ouverture 125.

Les surfaces d'appui circonférentiel et longitudinal entre les clavettes 160 et 165 et les ouvertures de passages 124 et 125 de l'enveloppe 120 sont respectivement opposées par rapport aux surfaces d'appui circonférentiel et longitudinal entre les clavettes 150 et 155 et les ouvertures de passages 122 et 123. Cela permet d'assurer une stabilité dans la transmission du mouvement de rotation entre la partie du rouleau située au niveau des clavettes 150 et 155 qui transmettent à l'enveloppe 120 le couple du moteur 13 couplé à l'arbre 131 et la partie opposée située au voisinage de la fusée 140 et les clavettes 160 et 165.

Grâce aux appuis antagonistes à la fois circonférentiels et longitudinaux des troisième et quatrième clavettes 160 et 165 sur les surfaces d'appui circonférentiel et longitudinal des ouvertures de passage 124 et 125, il est possible de maintenir en positions radiale et axiale l'enveloppe par rapport à l'élément de support axial 170, et ce tout en limitant les contraintes exercées par les clavettes sur l'enveloppe lors de la dilatation des clavettes et/ou de l'élément de support axial 170 grâce aux jeux circonférentiels I_{C3} et J_{C4} et aux jeux longitudinaux J_{I3} et J_{I4} ménagés entre les clavettes 160 et 165 et les ouvertures de passages 124 et 125 respectivement.

Les clavettes 160 et 165 et, par conséquent, les ouvertures de passages 124 et 125 de l'enveloppe (ainsi que les logements 136 et 137) sont placées de préférence dans des positions radialement opposées par rapport à l'axe Xf de l'enveloppe 120 comme illustré sur la figure 10. En effet, en plaçant les points d'appui axiaux des clavettes sur l'enveloppe dans un même plan perpendiculaire à l'axe Xf de l'enveloppe, on réduit les contraintes des clavettes sur l'enveloppe en cas de dilatation.

En outre, comme illustrées sur la figure 4, les clavettes 160 et 165 sont de préférence décalées axialement suivant l'axe Xf de l'enveloppe. Ce décalage permet également de réduire les contraintes des clavettes sur l'enveloppe en cas de dilatation.

Par ailleurs comme illustrées sur la figure 4, les surfaces d'appui longitudinal des clavettes 150 et 155 contre l'enveloppe 120, d'une part, et les surfaces d'appui longitudinal des clavettes 160 et 165 contre l'enveloppe 120, d'autre part, sont de préférence alignées suivant un même plan radial afin de ne pas exercer simultanément des forces opposées sur l'enveloppe 120 qui pourraient endommager cette dernière.

Comme représenté sur les figures 2 à 4, l'élément de support axial 170 comprend une pluralité de languettes élastiquement souples 180 qui sont uniformément réparties sur la circonférence de l'élément de support axial. Dans l'exemple décrit ici, les languettes 180 comportent une base de fixation centrale 181 qui est fixée dans le fond de logements 172 ménagés sur la surface externe de l'élément de support axial 170. Toutefois, les languettes peuvent être fixées directement sur la surface externe de l'élément de support axial. Les languettes 180 comportent en outre deux portions courbées 182 et 183 qui s'étendent de chaque de chaque côté et au-dessus de la base de fixation 181. Les portions courbées 182 et 183 sont destinées à venir en contact avec la surface interne de l'enveloppe

Les languettes peuvent être réalisées en matériau métallique ou en matériau composite thermostructural tel que du C-C ou C-C/SiC en fonction des niveaux de température atteints à cet endroit du rouleau.

Les languettes 180 permettent à la fois de réaliser un centrage à froid de l'enveloppe 120 sur l'élément de support axial 170 et de compenser les dilatations différentielles entre l'enveloppe en matériau composite thermostructural et l'élément de support axial en métal.

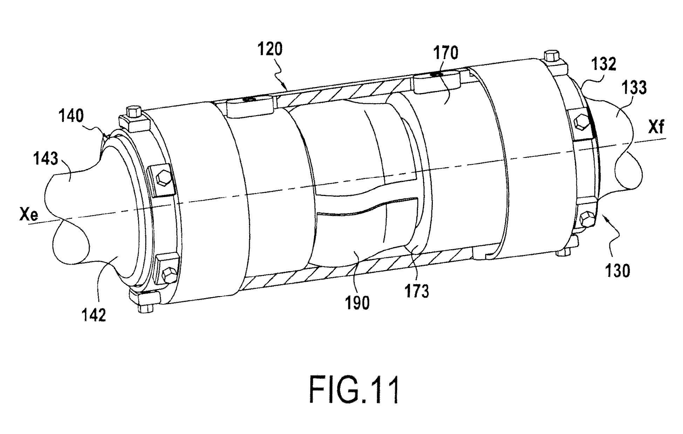

Selon une variante de réalisation illustrée sur la figure 11, une lame élastique 190 en forme de bague fendue peut être disposée autour de l'élément de support axial 170, ce dernier comportant dans ce cas une gorge annulaire 173 pour le maintien axial de la lame élastique.

Selon encore une variante de réalisation, le centrage à froid de l'enveloppe et la compensation des dilatations différentielles avec l'élément de support axial peuvent être réalisés avec des patins en feuillards de graphite disposés radialement sur la surface externe de l'élément de support axial comme les languettes décrites ci-avant.

Suivant une autre caractéristique additionnelle de l'invention, la coiffe 200 comprend un becquet de centrage 202 coopérant avec une portion de section réduite 125 présente à l'extrémité de l'enveloppe 120 et définissant un épaulement 126 (figure 4). De même, la coiffe 210 comprend un becquet de centrage 212 coopérant avec une portion de section réduite 127 présente à l'autre extrémité de l'enveloppe 120 et définissant un épaulement 128 (figure 4). Les becquets 202 et 212 délimitent chacun un évidemment dans lequel s'engage la portion de section réduite 125 ou 127 de l'enveloppe 120 permettant ainsi de réaliser le centrage au montage de l'axe Xf des fusées métalliques 130 et 140 avec l'axe Xe de l'enveloppe en composite thermostructural 120.

## Revendications

1. Rouleau (100) de ligne de recuit haute température comprenant une enveloppe cylindrique (120) en matériau composite et un élément de support axial (170) en matériau métallique comportant au moins à une de ses extrémités une fusée (130; 140),
le rouleau comprenant en outre au moins une première et une deuxième clavettes (150, 155) fixées à l'élément de support axial (170) et disposées chacune respectivement dans une première et une deuxième ouvertures de passage (122, 123) ménagées dans l'enveloppe (120), lesdites ouvertures de passage présentant des dimensions supérieures à celles des clavettes (150, 155), chaque ouverture de passage (122; 123) comportant, suivant un sens de parcours (Sc) déterminé le long de la circonférence de l'enveloppe (120), une première et une deuxième surfaces d'appui circonférentiel (1221, 1222; 1231, 1232) et, suivant un sens de parcours axial déterminé (Sa), une première et une deuxième surfaces d'appui longitudinal (1223, 1224; 1233, 1234),
**caractérisé en ce que** la première clavette (150) est montée en appui contre la première surface d'appui circonférentiel (1221) de la première ouverture de passage (122) tandis que la deuxième clavette (155) est montée contre la deuxième surface d'appui circonférentiel (1232) de la deuxième ouverture de passage (123),
et **en ce que** la première clavette (150) est montée en appui contre la deuxième surface d'appui longitudinal (1224) de la première ouverture de passage (122) tandis que la deuxième clavette (155) est montée contre la première surface d'appui longitudinal (1233) de la deuxième ouverture de passage (123).

2. Rouleau selon la revendication 1, **caractérisé en ce que** les première et deuxième clavettes (150, 155) sont disposées dans un plan perpendiculaire à l'axe de l'enveloppe.

3. Rouleau selon la revendication 1 ou 2, **caractérisé en ce que** les première et deuxième clavettes (150, 155) sont décalées suivant la direction axiale de l'enveloppe.

4. Rouleau selon l'une quelconque des revendications 1 à 3, **caractérisé en ce que** les première et deuxième surfaces d'appui longitudinal (1223, 1224; 1233, 1234) sont alignées suivant un même plan radial.

5. Rouleau selon l'une quelconque des revendications 1 à 4, **caractérisé en ce que** les première et deuxième clavettes (150, 155) sont disposées au voisinage d'une première extrémité de l'élément de support axial (170), le rouleau comprenant en outre au moins une troisième et une quatrième clavettes (160, 165) disposées au voisinage de la seconde extrémité de l'élément de support axial (170), lesdites troisième et une quatrième clavettes étant fixées à l'élément de support axial (170) et disposées chacune respectivement dans une troisième et une quatrième ouvertures de passage 124, 125) ménagées dans l'enveloppe (120), lesdites ouvertures de passage présentant des dimensions supérieures à celles des clavettes (160, 165), chaque ouverture de passage (124; 125) comportant, suivant ledit sens de parcours (Sc) déterminé le long de la circonférence de l'enveloppe, une première et une deuxième surfaces d'appui circonférentiel (1241, 1242; 1251, 1252) et, suivant ledit sens de parcours axial déterminé (Sa), une première et une deuxième surfaces d'appui longitudinal (1243, 1244; 1253, 1254),
**en ce que** la troisième clavette (160) est montée en appui contre la deuxième surface d'appui circonférentiel (1242) de la troisième ouverture de passage (124) tandis que la quatrième clavette (165) est montée contre la première surface d'appui circonférentiel (1251) de la quatrième ouverture de passage (125),
et **en ce que** la troisième clavette (160) est montée en appui contre la première surface d'appui longitudinal (1243) de la troisième ouverture de passage (124) tandis que la quatrième clavette (165) est montée contre la deuxième surface d'appui longitudinal (1254) de la quatrième ouverture de passage (125).

6. Rouleau selon la revendication 5, **caractérisé en ce que** les troisième et quatrième clavettes (160, 165) sont disposées dans un plan perpendiculaire à l'axe de l'enveloppe.

7. Rouleau selon la revendication 5 ou 6, **caractérisé en ce que** les troisième et quatrième clavettes (160, 165) sont décalées suivant la direction axiale de l'enveloppe.

8. Rouleau selon l'une quelconque des revendications 5 à 7, **caractérisé en ce que** les troisième et quatrième surfaces d'appui longitudinal (1243, 1244; 1253, 1254) sont alignées suivant un même plan radial.

9. Rouleau selon l'une quelconque des revendications 1 à 8, **caractérisé en ce que** chaque fusée comprend un becquet de centrage (202; 210) coopérant avec un épaulement ménagé à une extrémité de l'enveloppe.

10. Rouleau selon l'une quelconque des revendications 1 à 9, **caractérisé en ce qu'**il comprend au moins un élément élastiquement déformable (180) disposé entre la surface externe de l'élément de support axial (170) et la surface interne de l'enveloppe (120).

11. Rouleau selon la revendication 10, **caractérisé en ce qu'**il comprend une pluralité de languettes élastiques (180) uniformément réparties dans l'espace circonférentiel entre la surface externe de l'élément de support axial (170) et la surface interne de l'enveloppe (120).

12. Rouleau selon la revendication 10, **caractérisé en ce qu'**il comprend une pluralité de patins en feuillards de graphite uniformément répartis dans l'espace circonférentiel entre la surface externe de l'élément de support axial (170) et la surface interne de l'enveloppe (120).

13. Rouleau selon la revendication 10, **caractérisé en ce qu'**il comprend une lame élastique en forme de bague fendue (190) disposée dans l'espace circonférentiel entre la surface externe de l'élément de support axial (170) et la surface interne de l'enveloppe (120).

14. Rouleau selon l'une quelconque des revendications 1 à 13, **caractérisé en ce que** l'enveloppe cylindrique est réalisée en matériau composite C-C ou CMC.

## Patentansprüche

1. Walze (100) einer Hochtemperaturglühanlage, umfassend einen zylindrischen Mantel (120) aus Verbundwerkstoff und ein axiales Tragelement (170) aus metallischem Werkstoff, das wenigstens an einem seiner Enden einen Achszapfen (130; 140) umfasst,
wobei die Walze ferner wenigstens einen ersten und einen zweiten Keil (150, 155) umfasst, die an dem axialen Tragelement (170) befestigt sind und jeweils in einer ersten bzw. einer zweiten Durchgangsöffnung (122, 123), welche in dem Mantel (120) ausgebildet sind, angeordnet sind, wobei die Durchgangsöffnungen größere Abmessungen als die Keile (150, 155) aufweisen, wobei jede Durchgangsöffnung (122; 123) in einer bestimmten Laufrichtung (Sc) entlang des Umfangs des Mantels (120) eine erste und eine zweite Umfangsanlagefläche (1221, 1222; 1231, 1232) sowie in einer bestimmten axialen Laufrichtung (Sa) eine erste und eine zweite Längsanlagefläche (1223, 1224; 1233, 1234) aufweist,
**dadurch gekennzeichnet, dass** der erste Keil (150) in Anlage an der ersten Umfangsanlagefläche (1221) der ersten Durchgangsöffnung (122) angebracht ist, während der zweite Keil (155) an der zweiten Umfangsanlagefläche (1232) der zweiten Durchgangsöffnung (123) angebracht ist,
und dass der erste Keil (150) in Anlage an der zweiten Längsanlagefläche (1224) der ersten Durchgangsöffnung (122) angebracht ist, während der zweite Keil (155) an der ersten Längsanlagefläche (1233) der zweiten Durchgangsöffnung (123) angebracht ist.

2. Walze nach Anspruch 1, **dadurch gekennzeichnet, dass** der erste und der zweite Keil (150, 155) in einer zu der Achse des Mantels senkrechten Ebene angeordnet sind.

3. Walze nach Anspruch 1 oder 2, **dadurch gekennzeichnet, dass** der erste und der zweite Keil (150, 155) entlang der axialen Richtung des Mantels versetzt sind.

4. Walze nach einem der Ansprüche 1 bis 3, **dadurch gekennzeichnet, dass** die erste und die zweite Längsanlagefläche (1223, 1224; 1233, 1234) entlang einer gleichen Radialebene ausgerichtet sind.

5. Walze nach einem der Ansprüche 1 bis 4, **dadurch gekennzeichnet, dass** der erste und der zweite Keil (150, 155) in der Nähe eines ersten Endes des axialen Tragelements (170) angeordnet sind, wobei die Walze ferner wenigstens einen dritten und einen vierten Keil (160, 165) umfasst, die in der Nähe des zweiten Endes des axialen Tragelements (170) angeordnet sind, wobei der dritte und der vierte Keil an dem axialen Tragelement (170) befestigt sind und jeweils in einer dritten bzw. einer vierten Durchgangsöffnung (124, 125), welche in dem Mantel (120) ausgebildet sind, angeordnet sind, wobei die Durchgangsöffnungen größere Abmessungen als die Keile (160, 165) aufweisen, wobei jede Durchgangsöffnung (124; 125) in der bestimmten Laufrichtung (Sc) entlang des Umfangs des Mantels eine erste und eine zweite Umfangsanlagefläche (1241, 1242; 1251, 1252) sowie in der bestimmten axialen Laufrichtung (Sa) eine erste und eine zweite Längsanlagefläche (1243, 1244; 1253, 1254) aufweist,
dass der dritte Keil (160) in Anlage an der zweiten Umfangsanlagefläche (1242) der dritten Durchgangsöffnung (124) angebracht ist, während der vierte Keil (165) an der ersten Umfangsanlagefläche (1251) der vierten Durchgangsöffnung (125) angebracht ist,
und dass der dritte Keil (160) in Anlage an der ersten Längsanlagefläche (1243) der dritten Durchgangsöffnung (124) angebracht ist, während der vierte Keil (165) an der zweiten Längsanlagefläche (1254) der vierten Durchgangsöffnung (125) angebracht ist.

6. Walze nach Anspruch 5, **dadurch gekennzeichnet, dass** der dritte und der vierte Keil (160, 165) in einer zu der Achse des Mantels senkrechten Ebene angeordnet sind.

7. Walze nach Anspruch 5 oder 6, **dadurch gekennzeichnet, dass** der dritte und der vierte Keil (160, 165) entlang der axialen Richtung des Mantels versetzt sind.

8. Walze nach einem der Ansprüche 5 bis 7, **dadurch gekennzeichnet, dass** die dritte und die vierte Längsanlagefläche (1243, 1244; 1253, 1254) entlang einer gleichen Radialebene ausgerichtet sind.

9. Walze nach einem der Ansprüche 1 bis 8, **dadurch gekennzeichnet, dass** jeder Achszapfen einen Zentrierspoiler (202; 210) umfasst, der mit einer an einem Ende des Mantels ausgebildeten Schulter zusammenwirkt.

10. Walze nach einem der Ansprüche 1 bis 9, **dadurch gekennzeichnet, dass** sie wenigstens ein elastisch verformbares Element (180) umfasst, das zwischen der Außenfläche des axialen Tragelements (170) und der Innenfläche des Mantels (120) angeordnet ist.

11. Walze nach Anspruch 10, **dadurch gekennzeichnet, dass** sie eine Vielzahl von elastischen Laschen (180) umfasst, die in dem Umfangsraum zwischen der Außenfläche des axialen Tragelements (170) und der Innenfläche des Mantels (120) gleichmäßig verteilt sind.

12. Walze nach Anspruch 10, **dadurch gekennzeichnet, dass** sie eine Vielzahl von Schuhen aus Graphitband umfasst, die in dem Umfangsraum zwischen der Außenfläche des axialen Tragelements (170) und der Innenfläche des Mantels (120) gleichmäßig verteilt sind.

13. Walze nach Anspruch 10, **dadurch gekennzeichnet, dass** sie eine schlitzringförmige elastische Zunge (190) umfasst, die in dem Umfangsraum zwischen der Außenfläche des axialen Tragelements (170) und der Innenfläche des Mantels (120) angeordnet ist.

14. Walze nach einem der Ansprüche 1 bis 13, **dadurch gekennzeichnet, dass** der zylindrische Mantel aus C-C- oder CMC-Verbundwerkstoff gefertigt ist.

## Claims

1. A roller (100) for a high temperature annealing line, the roller comprising a cylindrical shell (120) made of composite material and an axial support element (170) made of metal material and including a spindle (130; 140) at at least one of its ends, the roller further comprising at least first and second keys (150, 155) fastened to the axial support element (170) and each arranged in a respective first or second through opening (122, 123) formed in the shell (120), said through openings presenting dimensions that are greater than the dimensions of the keys (150, 155), each through opening (122; 123) including in a determined travel direction (Sc) along the circumference of the shell (120), first and second circumferential bearing surfaces (1221, 1222; 1231, 1232) and, in a determined axial travel direction (Sa), first and second longitudinal bearing surfaces (1223, 1224; 1233, 1234);
**characterized in that** the first key (150) is mounted to bear against the first circumferential bearing surface (1221) of the first through opening (122) while the second key (155) is mounted against the second circumferential bearing surface (1232) of the second through opening (123); and
**in that** the first key (150) is mounted to bear against the second longitudinal bearing surface (1224) of the first through opening (122), while the second key (155) is mounted against the first longitudinal bearing surface (1233) of the second through opening (123).

2. A roller according to claim 1, **characterized in that** the first and second keys (150, 155) are arranged in a plane perpendicular to the axis of the shell.

3. A roller according to claim 1 or claim 2, **characterized in that** the first and second keys (150, 155) are offset in the axial direction of the shell.

4. A roller according to any one of claims 1 to 3, **characterized in that** the first and second longitudinal bearing surfaces (1223, 1224; 1233, 1234) are in alignment in a common radial plane.

5. A roller according to any one of claims 1 to 4, **characterized:**
**in that** the first and second keys (150, 155) are arranged in the vicinity of a first end of the axial support element (170), the roller further including at least third and fourth keys (160, 165) arranged in the vicinity of the second end of the axial support element (170), said third and fourth keys being fastened to the axial support element (170) and each being arranged in a respective third or fourth through opening (124, 125) formed in the shell (120), said through openings presenting dimensions greater than the dimensions of the keys (160, 165), each through opening (124; 125) including, in said determined travel direction (Sc) along the circumference of the shell, first and second circumferential bearing surfaces (1241, 1242; 1251, 1252) and, in said determined axial travel direction (Sa), first and second longitudinal bearing surfaces (1243, 1244; 1253, 1254);
**in that** the third key (160) is mounted to bear against the second circumferential bearing surface (1242) of the third through opening (124), while the fourth key (165) is mounted against the first circumferential bearing surface (1251) of the fourth through opening (125); and
**in that** the third key (160) is mounted to bear against the first longitudinal bearing surface (1243) of the third through opening (124), while the fourth key (165) is mounted against the second longitudinal bearing surface (1254) of the fourth through opening (125).

6. A roller according to claim 5, **characterized in that** the third and fourth keys (160, 165) are arranged in a plane perpendicular to the axis of the shell.

7. A roller according to claim 5 or claim 6, **characterized in that** the third and fourth keys (160, 165) are offset in the axial direction of the shell.

8. A roller according to any one of claims 5 to 7, **characterized in that** the third and fourth longitudinal bearing surfaces (1243, 1244; 1253, 1254) are in alignment in a common radial plane.

9. A roller according to any one of claims 1 to 8, **characterized in that** each spindle includes a centering spacer (202; 210) co-operating with a shoulder formed at an end of the shell.

10. A roller according to any one of claims 1 to 9, **characterized in that** it includes at least one elastically deformable element (180) arranged between the outer surface of the axial support element (170) and the inner surface of the shell (120).

11. A roller according to claim 10, **characterized in that** it includes a plurality of spring tongues (180) uniformly distributed in the circumferential space between the outer surface of the axial support element (170) and the inner surface of the shell (120).

12. A roller according to claim 10, **characterized in that** it includes a plurality of graphite sheet skids uniformly distributed in the circumferential space between the outer surface of the axial support element (170) and the inner surface of the shell (120).

13. A roller according to claim 10, **characterized in that** it includes a spring blade in the form of a split ring (190) arranged in the circumferential space between the outer surface of the axial support element (170) and the inner surface of the shell (120).

14. A roller according to any one of claims 1 to 13, **characterized in that** the cylindrical shell is made of C-C or CMC composite material.
